Europäisches Patentamt

European Patent Office

Office européen des brevets

(19)

(11) Numéro de publication: **0 056 352**
**A1**

## (12) DEMANDE DE BREVET EUROPEEN

(21) Numéro de dépôt: 82420002.6

(22) Date de dépôt: 06.01.82

(51) Int. Cl.³: **B 29 D 3/02**, B 32 B 5/12

(30) Priorité: 12.01.81 FR 8100499

(43) Date de publication de la demande: 21.07.82
**Bulletin 82/29**

(84) Etats contractants désignés: **AT BE CH DE GB IT LI NL SE**

(71) Demandeur: **J. BROCHIER ET FILS (Société Anonyme),**
**70, cours Tolstoi, F-69100 Villeurbanne (FR)**

(72) Inventeur: **Micheaux, Dominique, 18, rue des Pins,**
**F-38230 Vilette d'Anthon (FR)**
Inventeur: **Palmer, Ray, 515 Kings Place, Newport**
**Beach, CA 92663 (US)**

(74) Mandataire: **Laurent, Michel et al, 20 rue Louis Chirpaz**
**Boite Postale 32, F-69130 Lyon-Ecully (FR)**

(54) **Article textile multicouches pour le renforcement de matériaux stratifiés et procédé pour son obtention.**

(57) Article textile multicouches pour le renforcement de matériaux stratifiés.

Dans ce matériau chaque couche textile est constituée par un tissu dont une direction est formée de fils présentant un module élevé, fils maintenus entre eux par des fils de liage tissés lâche s'étendant dans une seconde direction.

Selon l'invention, les différentes couches élémentaires (14, 16, 16', 18) sont superposées de telle sorte que les fils à haut module soient orientés différemment d'une couche par rapport à l'autre, la liaison des différentes couches entre elles étant obtenue par couture (60) dans le sens de l'épaisseur de l'empilement (15) formé.

ARTICLE TEXTILE MULTICOUCHES POUR LE RENFORCEMENT DE MATERIAUX STRATIFIES ET PROCEDE POUR SON OBTENTION.

La présente invention a trait à un nouveau type d'article textile multicouches utilisable pour le renforcement de matériaux stratifiés ; elle concerne également un procédé pour l'obtention d'un tel matériau.

Les matériaux stratifiés sont connus depuis fort longtemps et sont constitués par une alternance de couches de matières textiles (tissus, non tissés....) que l'on imprègne de résine, l'ensemble étant ensuite traité thermiquement afin de provoquer la polymérisation de ladite résine et le durcissement de l'ensemble.

Ces matériaux ont trouvé de nombreuses applications, soit sous la forme d'éléments plans (plaques), soit sous la forme d'éléments conformés obtenus par moulage, notamment dans le bâtiment, l'automobile, la marine, l'aéronautique...

A ce jour la plupart des matériaux stratifiés sont obtenus par superposition d'une pluralité de couches textiles imprégnées de résine prépolymérisée. Comme matériau textile, on utilise soit des nappes formées de fils parallèles, soit des tissus tissés. De préférence, les nappes sont superposées en les entrecroisant de manière à obtenir de bonnes caractéristiques mécaniques dans toutes les directions. Comme matière entrant dans la composition de telles nappes textiles, on utilise par exemple des fils de verre, de graphite, de bore, aramide, seuls ou en mélange.

La superposition des différentes couches est, à ce jour, réalisée manuellement ce qui est long et coûteux et surtout entraîne des risques d'erreurs, le manipulateur pouvant se tromper dans le nombre de couches superposées et/ou dans la mise en place des différentes couches les unes par rapport aux autres.

Pour surmonter cet inconvénient, de nombreuses solutions ont été proposées pour obtenir des matériaux tissés ou non tissés ayant des formes diverses, ces matériaux étant imprégnés par une résine. De tels matériaux de forme complexe sont surtout destinés en vue de présenter de bonnes caractéristiques acoustiques et non pas de hautes performances mécaniques (résistance par exemple).

Ainsi, par exemple, le brevet des Etats-Unis d'Amérique 3 481 427 décrit un tissu tridimensionnel à base de fils de verre qui, après imprégnation avec une résine et polymérisation, donne un panneau rigide poreux présentant de très bonnes propriétés acoustiques. Selon ce document, il est possible de tisser en une seule opération un matériau de type "sandwich" dont une face est poreuse, l'autre face étant continue, ces deux faces étant reliées entre elles par des cannelures. Un tel matériau tissé n'est pas destiné à présenter une grande résistance mais a surtout pour fonction d'obtenir une bonne absorption des sons.

Le brevet des Etats-Unis d'Amérique 3 700 067 décrit également un tissu poreux tridimensionnel permettant également d'avoir une bonne absorption des sons et non pas d'obtenir des propriétés mécaniques élevées.

Or on a trouvé, et c'est ce qui fait l'objet de la présente invention, un nouveau type d'article textile multicouches qui permet de réaliser des articles stratifiés présentant de très grandes caractéristiques mécaniques et qui, par ailleurs, peut être obtenu par un procédé simple, sûr, rapide, procédé qui fait également partie de l'invention.

D'une manière générale, l'invention concerne un nouveau matériau textile multicouches pour le renforcement d'articles stratifiés du type selon lequel chaque couche de textile est constituée par un tissu dont une direction est formée de fils présentant un module élevé, fils maintenus entre eux par des fils de liage tissés lâches s'étendant dans une seconde direction, ce matériau multicouches se caractérisant par le fait que les différentes couches élémentaires sont superposées de telle sorte que les fils à haut module soient orientés différemment d'une couche par rapport à l'autre, la liaison des différentes couches entre elles étant obtenue par couture dans le sens de l'épaisseur de l'empilement formé.

Si dans le matériau conforme à l'invention, la liaison des différentes couches élémentaires est obtenue par couture, il est évident que cela n'est pas limitatif et que d'autres techniques d'assemblages équivalentes pourraient être utilisées par exemple toute technique faisant appel à l'aiguilletage, au tricotage...

Dans une forme de réalisation préférentielle, le matériau conforme à l'invention comporte au moins trois couches textiles superposées du type précité, chacune de ces couches textiles étant telles :

- que dans la première les fils à haut module soient orientés dans le sens longitudinal du tissu (chaîne) orientation qui sera désignée par l'expression "direction 0°" dans la suite de la description,

- la deuxième comportant des fils haut module s'étendant sensiblement à 45° par rapport à la direction longitudinale du tissu (orientation désignée par l'expression "45°" dans la suite de description),

- et la troisième présentant des fils haut module orientés transversalement par rapport à la longueur du tissu (orientation qui sera désignée par l'expression "90°" dans la suite de la description).

Dans les tissus entrant dans la composition d'un matériau textile conforme à l'invention, le maintien des fils haut module est obtenu par des fils de liage tissés lâche avec les fils précités, ces fils de liage s'étendant soit longitudinalement soit transversalement par rapport à la longueur du tissu.

Si dans le mode de réalisation précité, les fils à haut module présentent des orientations 0°, 45°, 90°, il est bien entendu que cela n'est pas limitatif et qu'une orientation différente, par exemple 30°, pourrait également être envisagée.

0056352

Les couches élémentaires constituées pour partie majoritaire de fils à haut module orientés différemment d'une couche à l'autre sont superposées selon un ordre et un nombre fonction de la structure finale désirée et ces différentes couches sont assemblées par couture de manière à obtenir un ensemble homogène.

Le matériau textile multicouches ainsi réalisé peut être imprégné avec une résine epoxy prépolymérisée et stocké sur des rouleaux afin d'être utilisé ultérieurement pour réaliser tout type d'article stratifié de forme appropriée.

Eventuellement, il pourrait être envisagé d'utiliser un tel matériau textile multicouches à l'état sec et de le disposer dans un moule ou sur une forme avant imprégnation cette imprégnation étant alors réalisée, par exemple avec une résine epoxy, dans le moule ou sur la forme elle-même.

L'invention concerne également un procédé pour l'obtention d'un tel matériau textile multicouches, procédé qui consiste essentiellement :

- à réaliser une pluralité de tissus élémentaires dont une direction est constituée de fils ayant un module élevé, liés entre eux par des fils de liage tissés lâche s'étendant dans une seconde direction, l'orientation des fils à haut module étant différente d'un tissu à l'autre,

- à superposer selon un ordre préétabli un nombre déterminé de tissus ainsi réalisés,

- à assembler par coutures l'empilement de tissus élémentaires ainsi formés.

L'invention et les avantages qu'elle apporte seront cependant mieux compris grâce aux exemples de réalisation donnés ci-après à titre indicatif mais non limitatif et qui sont illustrés par les schémas annexés dans lesquels :

- la figure 1 est une vue en perspective d'une machine permettant de réaliser un matériau textile multicouches conforme à l'invention,

- les figures 2, 3 et 4 illustrent différents types de tissus élémentaires pouvant entrer dans la réalisation d'un tel matériau multicouches tissus dans lesquels les fils à haut module sont orientés respectivement dans le sens de la chaîne (figure 2), à 45° par rapport au sens de la chaîne (figure 3), à 90° par rapport au sens de la chaîne (figure 4),

- les figures 5 et 9 illustrent différentes formes de types de couture permettant de lier les différentes couches élémentaires formant le matériau conforme à l'invention, ces coutures s'étendant dans le sens de la longueur dudit matériau,

- la figure 10 est une vue en coupe schématique d'un matériau textile multicouches réalisé conformément à l'invention vue selon la ligne 10 de la figure 1, matériau qui peut être imprégné avec une résine,

- les figures 11a, 11b, 11c et 11d illustrent les différentes étapes de réalisation d'un matériau multicouches réalisé conformément à l'invention ayant sensiblement, en coupe transversale, la forme d'un I,

- la figure 12 est une vue schématique en perspective, partielle, d'une variante dans laquelle le matériau multicouches comporte des éléments de renforcement additionnels sur ses bords et,

- la figure 12a montre un matériau ayant une forme de I réalisé à partir d'un matériau obtenu conformément au mode de réalisation illustré par la figure 12.

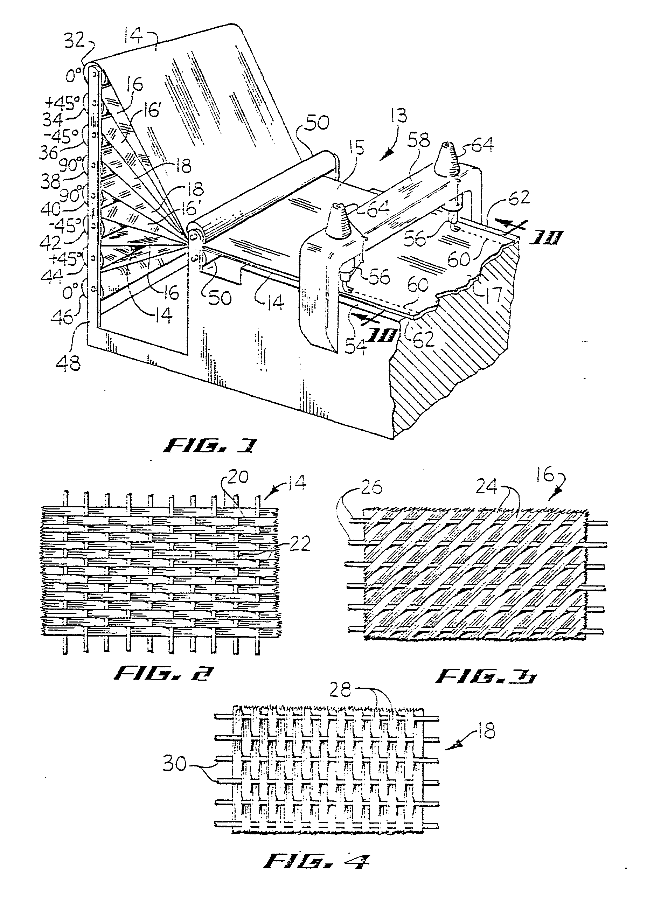

Si l'on se rapporte aux figures 1 à 4, la référence générale (13) est utilisée pour désigner la machine permettant la réalisation d'un matériau selon l'invention, matériau désigné par la référence générale (17) et qui est constitué d'une pluralité de couches de tissus élémentaires, l'empilement de ces tissus étant désigné, avant couture, par la référence générale (15).

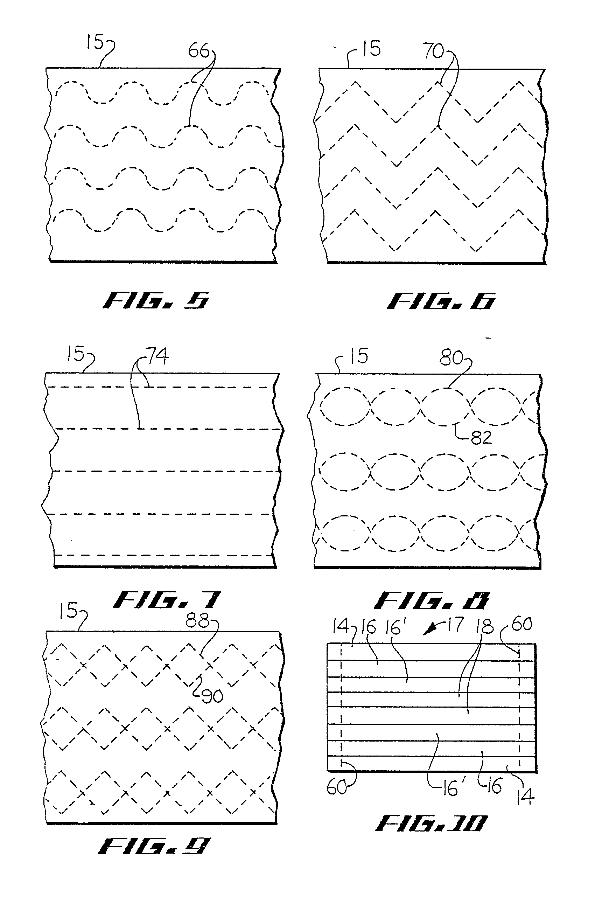

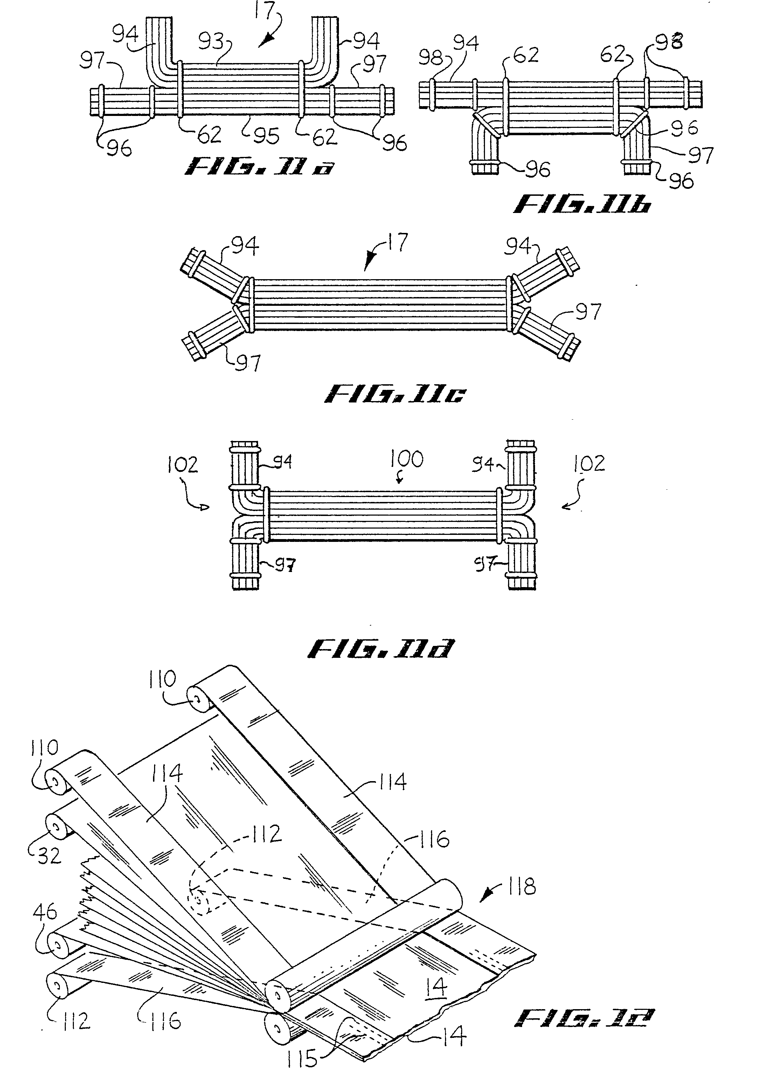

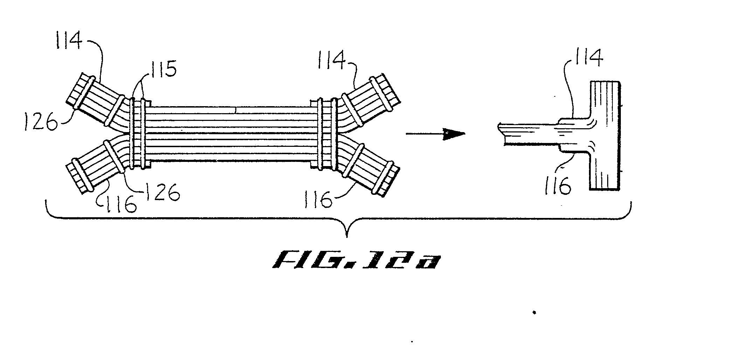

Dans le mode de réalisation illustré par la figure 1, l'empilement (15) est constitué de huit couches de tissus élémentaires. Ces huits couches de tissus sont formées de trois types de tissus différents, illustrés aux figures 3 et 4, désignés respectivement par les références (14), (16), (18) l'empilement de ces différentes couches étant réalisé dans l'ordre illustré schématiquement à la figure 10.

Le tissu élémentaire (14) illustré par la figure 2 est constitué principalement de fils à haut module (20) s'étendant dans le sens de la chaîne (direction 0°) et représentant approximativement 95 % du poids total dudit tissu (14). Ces fils de chaîne sont de préférence des fils à haut module tels que ceux à base de graphite, de bore ou de carbure de silicium mais il est évident, qu'en fonction des résultats recherchés, d'autres matériaux pourraient être utilisés tels que par exemple des fils de verre ou des fibres organiques notamment des fils aramide, polyster. Le maintien des fils est obtenu au moyen de fils de liage lâches (22) tissés dans le sens trame, ces fils étant à base de fils de verre ou de fils organiques (aramide, polyester) et ayant essentiellement pour fonction de maintenir l'orientation des fils (20).

Le tissu élémentaire (16) illustré par la figure 3 est constitué également pour partie majoritaire (environ 95 %) de fils à haut module (24), par exemple à base de graphite, ces fils formant un angle de 45° par rapport au sens longitudinal du tissu. Le maintien des fils (24) est obtenu au moyen de fils de chaîne (26), tissés lâche avec les fils précités, ces fils de liage étant à base de fils de verre ou de fils organiques.

Le tissu élémentaire (18) illustré par la figure 4 est, quant à lui, constitué pour partie majoritaire (environ 95 %) de fils à haut module (graphite par exemple) s'étendant à 90° par rapport à la direction longitudinale du tissu c'est-à-dire, dans le cas présent, dans le sens de la trame. Le maintien de ces fils (28) est obtenu au moyen de fils de chaîne tissés lâche (30), fils constitués de fils de verre ou de fils organiques.

La figue 2 illustre schématiquement la réalisation d'un matériau textile multicouches obtenu conformément à l'invention à partir de tels tissus élémentaires illustrés par les figures 2, 3, 4 le matériau obtenu étant par ailleurs illustré schématiquement en coupe transversale à la figure 10.

Si l'on se reporte à la figure 1, pour obtenir un matériau textile multicouches comportant huit tissus élémentaires on utilise huit bobines formées à partir des tissus illustrés par les figures 2, 3, 4 et supportées sur un bâti (48) disposé à l'arrière de l'installation (13). Les rouleaux seront positionnés de telle sorte que l'on obtienne un empilement (15) dans lequel les couches élémentaires successives présentent des fils à haut module ayant des orientations différentes à savoir formant, par rapport à la longueur du tissu, successivement des angles 0°, + 45°, -45°, 90°, 90°, -45°, + 45°, 0°. Pour ce faire, les rouleaux supérieur et inférieur (32) et (46) sont formés d'un tissu élémentaire (14) illustré par la figure 2 ; les rouleaux (34) et (44) sont formés d'un tissu (16) illustré par la figure 3 ; les rouleaux (38) et (40) sont à base d'un tissu illustré à la figure 4. Les rouleaux (36) et (42) sont également constitué d'un tissu (16) illustré à la figure 3 mais dans ces rouleaux les fils à haut module (24) sont orientés dans la direction -45° au lieu d'être dans la direction +45°. Un tel tissu dont les fils à haut module sont orientés à -45° est désigné par la référence (16').

Les tissus élémentaires (14), (16), (16') et (18) stockés sur les rouleaux (32) à (46) sont disposés selon l'ordre indiqué ci-dessus et sont amenés par l'intermédiaire de cylindres (50) sur le tablier de la machine (13) afin de former un empilement (15). Cet empilement (15) est entraîné sur le tablier (54) de la machine, par exemple au moyen de cylindres d'appel (non représentés) l'ensemble étant ensuite renvidé, par exemple sur un rouleau, de manière conventionnelle (non représenté). Pendant sont déplacement, l'empilement (15) passe sous une pluralité de têtes de couture (56) dont deux seulement sont représentées par mesure de simplification à la figure 2, et qui permettent d'assembler les différentes couches entre elles. Ces têtes de couture (56), dont le nombre sera fonction de la liaison désirée, permettent de réaliser des coutures longitudinales désignées par la référence (60), coutures ayant de préférence des mailles lâches et qui s'étendent sur toute l'épaisseur du matériau (15). De préférence, le fil utilisé pour réaliser des coutures est un fil fin (verre, aramide, polyester...) qui est alimenté à partir de bobines (64) montées sur un support (58) constituant l'ensemble de couture. Le matériau textile multicouches cousu (17), conforme à l'invention présente une structure schématisée à la figure 10.

Comme dit précédemment, le nombre de fils de couture (60) peut varier. Il est également possible de faire varier la forme des coutures par exemple en leur donnant des configurations telles que celles qui sont illustrées aux figures 5 et 9.

Ainsi, dans l'exemple illustré par la figure 5, l'empilement (15) est cousu au moyen de coutures (66) ayant une forme sinusoïdale alors que dans la figure 6 les coutures (70) ont sensiblement la forme de V les coutures (74) de la figure 7 étant strictement parallèles les unes aux autres.

Des coutures doubles (80-82) ou (88-90) peuvent également être réalisées ainsi que cela est présenté au figures 8 et 9.

Un tel matériau multicouches peut être utilisé soit tel quel pour réaliser un matériau stratifié par exemple à partir de résine epoxy, soit, éventuellement, être préimprégné d'une résine prépolymérisée pour être stocké dans cet état avant utilisation. Les conditions permettant de réaliser de tels stratifiés seront celles habituellement utilisées et ne seront donc pas décrites en détail.

Bien entendu, l'invention n'est pas limitée aux modes de réalisation décrits précédemment et le matériau textile multicouches selon l'invention peut comporter un nombre plus ou moins important de couches élémentaires.

Par ailleurs, si l'invention permet d'obtenir des matériaux multicouches plans, elle présente également l'avantage de permettre la réalisation de matériaux multicouches ayant d'autres configurations par exemple une section en forme de I, T, Y...

Les figures 11a à 11d illustrent l'obtention d'un tel matériau ayant la forme d'un I et les figures 12 et 12a une variante d'un tel matériau.

Le processus opératoire pour réaliser une matériau textile multicouches permettant d'obtenir une article stratifié ayant la forme d'une poutre en I à partir d'un empilement constitué de huit tissus élémentaires (par exemple) est le suivant.

Tout d'abord après avoir réalisé l'empilement des huit tissus élémentaires selon la séquence désirée, on réalise deux coutures (62) dans la partie centrale permettant de lier ces huit couches. Cela étant fait, on replie les bords (94) des quatre couches supérieures (93) et, dans les quatre couches inférieures (95) on réalise deux coutures (96) permettant de lier les extrémités (97) des quatres couches inférieures (95). L'empilement est ensuite retourné de manière à réaliser d'une façon similaire deux coutures (98) sur les bords (94) des quatre couches (93) (figure 11b).

On obtient donc un ensemble (figure 11b) comportant une partie centrale et deux extrémités en forme de V.

Ces extrémités (94-97) peuvent être repliées à 90° (figure 11d) pour obtenir une poutre ayant la forme d'un I.

Il est également possible d'obtenir grâce à une telle technique des matériaux textiles multicouches en forme présentant des parties renforcées tel que cela est représenté aux figures 12, 12a. Ainsi, dans l'exemple illustré par ces figures, des bandes de renforcement provenant de rouleaux (110) constituées par exemple d'un matériau tissé unidirectionnel du type illustré par la figure 2 seront disposées au dessus du rouleau (32) et des bandes provenant de rouleaux (112), à base d'un matériau similaire, seront disposées en dessous du rouleau (46). Les bandes (114), (116) précitées sont liées par coutures (115), (126) ainsi que cela est illustré à la figure 12a dans les zones de l'empilement destinées à être repliées.

La description qui précède montre bien avantages apportés par l'invention et notamment le fait qu'elle permet d'obtenir de manière simple, rapide et sûre des matériaux textiles multicouches pouvant avoir des formes diverses et qui peuvent être facilement imprégnés de résine en vue de réaliser des articles stratifiés.

Bien entendu, l'invention n'est pas limitée aux exemples de réalisation décrits précédemment mais elle en couvre également toutes les variantes réalisées dans le même esprit. Ainsi, si la liaison des différentes couches entre elles a été plus particulièrement décrite en faisant appel à une technique de couture, il est évident que d'autres techniques équivalentes pourraient être utilisées par exemple des techniques d'aiguilletage, de tricotage.

De plus, les tissus élémentaires entrant dans la composition d'un tel matériau pourraient avoir des orientations différentes de celles décrites par exemple être orientés à 30° par rapport à la longueur du tissu.

REVENDICATIONS

1/ Article textile multicouches pour le renforcement de matériaux stratifiés au type selon lequel chaque couche textile est constituée par un tissu dont une direction est formée de fils (20, 24, 28) présentant un module élevé, fils maintenus entre eux par des fils de liage (22, 26, 30) tissés lâche s'étendant dans une seconde direction caractérisée par le fait que les différentes couches élémentaires (14, 16, 16', 18) sont superposées de telle sorte que les fils à haut module (20, 24, 28) soient orientés différemment d'une couche par rapport à l'autre, la liaison des différentes couches entre elles étant obtenue par coutures (60) dans le sens de l'épaisseur de l'empilement formé.

2/ Matériau selon la revendication 1, caractérisé par le fait qu'il comporte au moins trois couches superposées (14, 16, 18), chacune de ces couches textiles étant telles :

- que dans la première (14) les fils à haut module (20) soient orientés dans le sens longitudinal du tissu (chaîne),

- la deuxième (16) comportant des fils à haut module (24) s'étendant sensiblement à 45° par rapport à la direction longitudinale du tissu,

- et la troisième (18) présentant des fils haut module (28) orientés transversalement par rapport à la longueur du tissu.

3/ Matériau selon l'une des revendications 1 et 2, caractérisé par le fait que les coutures (60) permettant de relier entre elles les différentes couches textiles sont réalisées dans le sens longitudinal des tissus et sont soient rectilignes, sinusoïdales, en forme de V.

4/ Matériau selon l'une des revendications 1 à 3, caractérisé par le fait qu'il présente une section en forme de I, de T...

5/ Matériau selon l'une des revendications 1 à 4, caractérisé par le fait qu'il est imprégné avec une résine prépolymérisée et stocké avant utilisation définitive.

6/ Procédé pour l'obtention d'un matériau textile multicouches selon l'une des revendications 1 à 5, **caractérisé** par le fait qu'il consiste essentiellement :

- à réaliser une pluralité de tissus élémentaires (14, 16, 18) dont une direction est constitué de fils ayant un module élevé (20, 24, 28), liés entre eux par des fils de liage (22, 26, 30) tissés lâche s'étendant dans une seconde direction, l'orientation des fils à haut module étant différente d'un tissu à l'autre,

- à superposer selon un ordre préétabli un nombre déterminé de tissus (14, 16, 18) ainsi réalisés,

- à assembler par couture (60) l'empilement de tissus élémentaires ainsi formés.

7/ Procédé selon la revendication 6 pour l'obtention d'un matériau textile multicouches ayant la forme d'une poutre en I qui consiste, après avoir constitué un empilement d'une pluralité de tissus élémentaires (14, 16, 18) à réaliser deux coutures (62) dans la partie centrale permettant de lier l'empilement sur toute son épaisseur puis, à replier les bords (94) des couches supérieures (93) et, dans les couches inférieures (95) à réaliser deux coutures (96) permettant de lier l'extrémité (97) des couches inférieures (95), l'empilement étant ensuite retourné de manière à réaliser d'une façon similaire deux coutures (98) sur les bords (94) des couches (93).

8/ Procédé selon l'une des revendications 6 et 7, caractérisé par le fait que l'on incorpore des bandes de renforcement (114, 116), de part et d'autre de l'empilement et ce dans certaines zones, ces bandes étant liées par coutures audit empilement.

0056352

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

0056352

**FIG. 11a**

**FIG. 11b**

**FIG. 11c**

**FIG. 11d**

**FIG. 12**

FIG.12a

**Office européen des brevets**

**0056352**
Numéro de la demande

# RAPPORT DE RECHERCHE EUROPEENNE

EP 82 42 0002

| | **DOCUMENTS CONSIDERES COMME PERTINENTS** | | **CLASSEMENT DE LA DEMANDE (Int. Cl. 3)** |
|---|---|---|---|
| Catégorie | Citation du document avec indication, en cas de besoin, des parties pertinentes | Revendication concernée | |
| A | <u>FR - A - 2 312 369</u> (MARCEL DASSAULT-BREGUET)<br><br>* revendications 1-8; page 1, lignes 28-40; page 3, ligne 16 - page 4, ligne 9; exemple 1; figures 3-6 *<br><br>-- | 1,2,7 | B 29 D 3/02<br>B 32 B 5/12 |
| A | <u>WO - A - 80 02 254</u> (H.H. FOR SCH)<br><br>* revendications 3-5,9,10,14; page 4, ligne 20 - page 5, ligne 15; figures 8,9,11 *<br><br>-- | 7 | **DOMAINES TECHNIQUES RECHERCHES (Int. Cl. 3)**<br><br>B 32 B<br>B 29 D |
| A | <u>FR - A - 2 241 410</u> (MARCEL DASSAULT BREGUET)<br><br>* revendications 1,3,4; page 1, ligne 21 - page 2, ligne 32; figures 1,1a *<br><br>-- | 1,5,6 | |
| A | <u>GB - A - 1 426 768</u> (FOTHERGILL)<br><br>* en entier *<br><br>-- | 8 | |
| A,P | <u>EP - A - 0 031 785</u> (J. BROCHIER)<br>& FR - A - 2 473 567<br><br>------------- | | |

**CATEGORIE DES DOCUMENTS CITES**

X | Le présent rapport de recherche a été établi pour toutes les revendications

| Lieu de la recherche | Date d'achèvement de la recherche | Examinateur |
|---|---|---|
| La Haye | 16-04-1982 | BLASBAND |

**OEB Form 1503.1   06.78**